# EUROPÄISCHE PATENTSCHRIFT

(11) **EP 1 467 455 B1**
(45) Veröffentlichungstag und Bekanntmachung des Hinweises auf die Patenterteilung: **12.07.2006**
(21) Anmeldenummer: 04004781.3
(22) Anmeldetag: 02.03.2004
(51) Int. Cl.: H02G 3/14

(54) **Mehrteilige Abdeckung für Elektroinstallationseinsätze**
Multipart cover for electrical installation inserts
Couvercle multipièce pour inserts dans une installation électrique

(30) Priorität: 08.04.2003 DE 10316270
(43) Veröffentlichungstag der Anmeldung: 13.10.2004
(73) Patentinhaber: Hager Polo Produkcja Sp. z o.o., 43-100 Tychy (PL)
(72) Erfinder: Edelhoff, Detlef, 58640 Iserlohn (DE); Scherer, Peter, 67657 Kaiserslautern (DE); Eigler, Norbert, 58540 Meinerzhagen (DE)
(74) Vertreter: Nuss, Pierre

(56) Entgegenhaltungen:
- EP-A- 0 620 620
- US-A- 5 696 350

## Beschreibung

Die Erfindung betrifft eine mehrteilige Abdeckung für Elektroinstallationseinsätze, im Wesentlichen bestehend aus einem den Installationseinsatz wenigstens teilweise umschließenden Rahmen, der wandseitig mit dem Installationseinsatz und raumseitig mit Sicht-, Zier-, Informations- und /oder Bedienelemente verbindbar ist, wobei identische Rahmen aneinander befestigbar sind.

Derartige Abdeckungen sind beispielsweise aus der DE-OS 2 452 173 bekannt. Sie weisen grundsätzlich den Vorteil auf, dass zur Einfassung benachbarter Elektroinstallationseinsätze identische Teile in entsprechender Anzahl durch Verkuppeln einen zusammenhängenden Abdeckrahmen bilden. Sie haben sich jedoch bislang aufgrund ihrer Nachteile nicht am Markt durchsetzen können. So offenbart beispielsweise die DE-OS 2 452 173 einen mehrteiligen Abdeckrahmen, welcher aus einzelnen über Vorsprünge und Vertiefungen ineinander eingreifenden Rahmenteilen besteht. Diese weisen entsprechende Öffnungen für den Einsatz von Funktionselementen, wie z.B. Schaltern oder Steckdosen, auf. Die offenbarten Kupplungen gewährleisten jedoch lediglich die korrekte Ausrichtung der Rahmenteile zueinander, die eigentliche Befestigung ist nur mittels zusätzlichen Befestigungsgliedern möglich, die entweder an einer Unterputzdose oder an einem Elektroinstallationseinsatz angebracht werden. Das DE-GM 72 014 26 offenbart eine rahmenartige Abdeckung für Installationsgeräte Einsätze, welche über Stifte zusammensteckbar sind. Auch in diesem Fall erfolgt jedoch eine Festlegung der einzelnen Rahmenteile in eine Befestigung am Elektroinstallationseinsatz.

Ferner ist durch EP-A-0620620 eine Abdeckung gemäß dem Oberbegrift des Anspruchs 1 bekannt.

Von Nachteil ist, dass die Elektroinstallationseinsätze äußerst exakt zueinander ausgerichtet sein müssen. Da die Steckverbindungen zwischen den Rahmenteilen keine Kräfte aufnehmen können, werden die Rahmenteile ansonsten an ihren Verbindungsstellen auseinandergezogen, wodurch optisch unschöne Spalten entstehen. Darüber hinaus ist die Verschraubung der Rahmenteile am Elektroinstallationseinsatz aufwendig.

Zudem kommt es an den Verbindungsstellen der Rahmen zu optisch unschönen Spalten, wenn benachbarte Elektroinstallationseinsätze nicht korrekt zueinander ausgerichtet sind, da die eigentlichen Steckverbindungen nicht in der Lage sind, Kräfte aufzunehmen.

Aufgabe der Erfindung ist es daher, eine mehrteilige Abdeckung für Elektroinstallationseinsätze zu schaffen, welche eine sichere Verbindung der Einzelteile gewährleistet und dabei eine unkomplizierte Montage ermöglicht.

Die Lösung der Aufgabe ergibt sich aus den Merkmalen des Anspruches 1, insbesondere aus dem Kennzeichenteil, wonach gegenüberliegende, der Befestigung von Nachbarrahmen dienende Seitenflächen der Rahmen jeweils mindestens einen Zentrierzapfen und/oder eine Zentrierbohrung sowie eine Rastöffnung oder einen Rastvorsprung aufweisen, und dass die zugfeste Verbindung der benachbarten Rahmen nach dem Ineinandergreifen von Zentrierzapfen und Zentrierbohrung durch eine Drehverrastung des Rastvorsprunges in der Rastöffnung erfolgt.

Eine derartig ausgestaltete Verbindung verhindert eine Relativbewegung der Einzelrahmen zueinander in Horizontal- wie in Vertikalrichtung durch den Eingriff der Rastvorsprünge in die Rastöffnungen und in die Tiefe durch den Zentrierzapfen. So ist es möglich, mehrteilige Rahmensysteme auch dort einzusetzen, wo die Elektroinstallationseinsätze zueinander ungenau positioniert sind oder eine Wand Unebenheiten aufweist, da zwischen den Einzelteilen eine kraftschlüssige Verbindung besteht.

Darüber hinaus offenbart der heterogene Stand der Technik der DE-GM 92 022 80 eine Gerätedose zur Anordnung in Kabelkanälen, bei welcher Rahmenteile über eine stiftartige Verbindung in Gerätedosen eingesteckt und anschließend mit einer Madenschraube arretiert werden. Diese Lösung erlaubt zwar eine feste Verbindung von Rahmen und Gerätedose, jedoch ist eine Schraubmontage wegen des erhöhten Aufwandes unerwünscht.

Ebenfalls heterogenen Stand der Technik stellt die EP-OS 1 039 608 dar, welche miteinander verbindbare Aufputzdosen und - rahmen für Elektroinstallationen offenbart. In dieser werden einzelne Rahmen, welche den Elektroinstallationseinsatz aufnehmen, mittels Nut und Feder verbunden. Diese Verbindung ermöglicht zwar einen relativ festen Halt in einer horizontalen bzw. vertikalen Richtung, kann jedoch auftretende, unterschiedliche Spaltmaße, welche durch beispielsweise unebene Wände hervorgerufen werden, nicht verhindern.

Weiter ist es denkbar, dass die Rahmen angrenzend an die der Befestigung dienenden Seitenflächen Befestigungsöffnungen für wenigstens ein klammerartiges Verbindungselement aufweisen, die der zusätzlichen Verbindung benachbarter Rahmen dienen. Dies kann wenn nötig die Verbindung zwischen zwei Einzelrahmen zusätzlich sichern.

Auch ist eine Ausführungsform denkbar, bei der nicht der Verbindung benachbarter Rahmen dienende, mindestens einen Zentrierzapfen und/oder eine Zentrierbohrung sowie eine Rastöffnung oder einen Rastvorsprung aufweisende Seitenflächen eines Rahmens mit einer Abschlussleiste versehen sind, die mindestens einen Zentrierzapfen und/oder eine Zentrierbohrung sowie eine Rastöffnung oder einen Rastvorsprung aufweist, und dass die zugfeste Verbindung des Rahmens mit der Abschlussleiste nach dem Ineinandergreifen von Zentrierzapfen und Zentrierbohrung durch eine Drehverrastung des Rastvorsprunges in der Rastöffnung erfolgt.

Die Abschlussleiste ermöglicht es auf vorteilhafte Weise, die Verbindungselemente eines Rahmenteiles abzudecken und so ein optisch ansprechendes Gesamtbild des Rahmens zu gewährleisten. Zudem ist der Aufwand für die Produktion einer Abschlussleiste wesentlich geringer und damit weniger kostenintensiv, als in die Produktion eines Abschlussrahmenteiles, welches nur an einer Seite Befestigungselemente aufweist.

Eine besonders bevorzugte Ausführungsform kennzeichnet sich dadurch, dass der Rahmen als Unterrahmen zur Aufnahme großflächiger Sicht-, Zier-, Informations- und/oder Bedienelemente ausgebildet ist.

Diese ausgesprochen vorteilhafte Ausführungsform erlaubt es, neben dem modularen Aufbau des Rahmensystems großflächige Funktionselemente zur Abdeckung von Elektroinstallationseinsätzen zu verwenden. Darüber hinaus verliert der Rahmen seine Bedeutung als wesentliches Gestaltungselement für die Abdeckung von Elektroinstallationseinsätzen, so dass die Ausgestaltung im Wesentlichen von den großflächigen Funktionselementen abhängt und für verschiedene Serien ein und derselbe Unterrahmen verwendet werden kann.

Weitere Vorteile ergeben sich aus den Zeichnungsbeschreibungen. Es zeigen:
Fig. 1 Explosionsdarstellung einer mehrteiligen Abdeckung für Elektroinstallationseinsätze,
Fig. 2 Darstellung des Zusammenbaus gemäß Fig. 1,
Fig. 3 eine Rückansicht eines Rahmens mit Abschlussleisten und
Fig. 4 eine Detailansicht des Rastmechanismusses.

In den Zeichnungen ist eine mehrteilige Abdeckung für Elektroinstallationseinsätze insgesamt mit der Ziffer 10 bezeichnet.

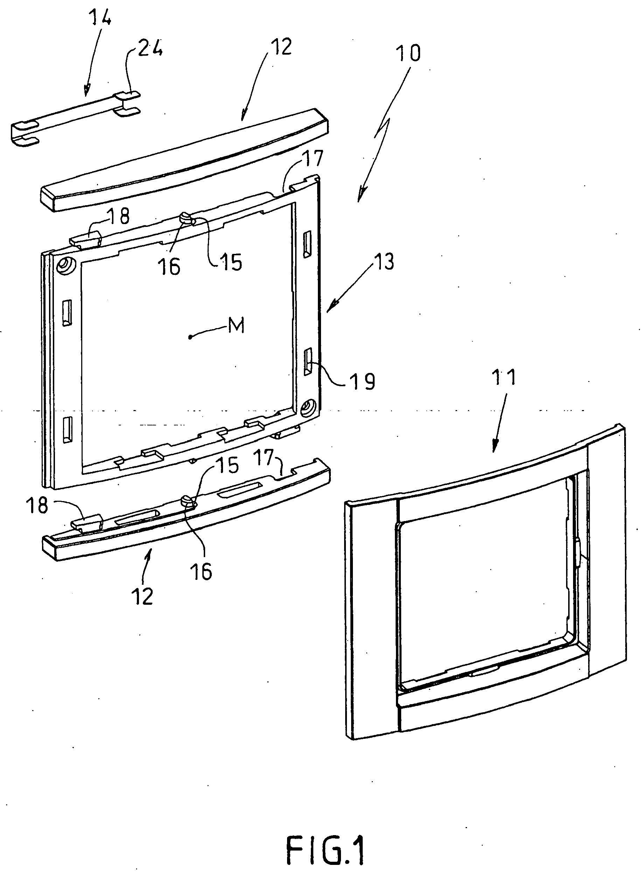

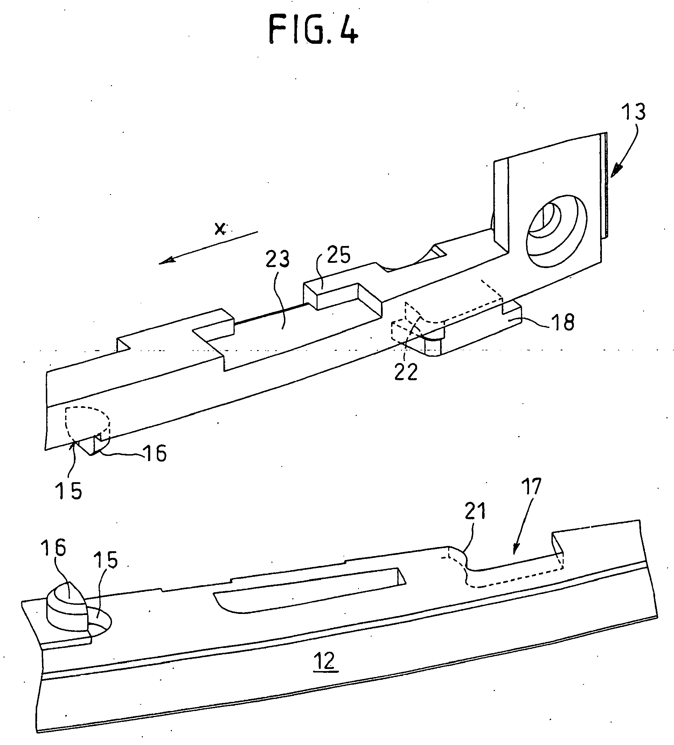

Die Fig. 1 zeigt die mehrteilige Abdeckung 10 in einer Explosionsdarstellung. Sie besteht im Wesentlichen aus einem Unterrahmen 13, Abschlussleisten 12 und einem Blendrahmen 11. Unterrahmen 13 und Abschlussleisten 12 weisen jeweils miteinander korrespondierende T-förmige Rastmittel 18 und Rastausnehmungen 17 auf, welche nach einer Verrastung insbesondere vertikale Verschiebungen der Teile zueinander verhindern, um immer ein einheitliches Spaltmaß an den Verbindungsstellen zu gewährleisten. Die darüber hinaus miteinander korrespondierenden Zentrierzapfen 16 und Zentrieröffnungen 15 verhindern eine relative Verschiebung der Teile in der Tiefe und horizontaler Richtung. Fig. 4 zeigt , dass Zentrieröffnung 15 und Zentrierzapfen 16 jeweils eine halbkreisförmige Kontur aufweisen und durch benachbarte Anordnung einen Vollkreis bilden. Ein Verbindungselement 14 mit hakenförmigen Endbereichen 24 kann zusätzlich genutzt werden, um benachbarte Teile - Unterrahmen 13 und Abschlussleiste 12 bzw. zwei Unterrahmen 13 - miteinander zu verbinden.

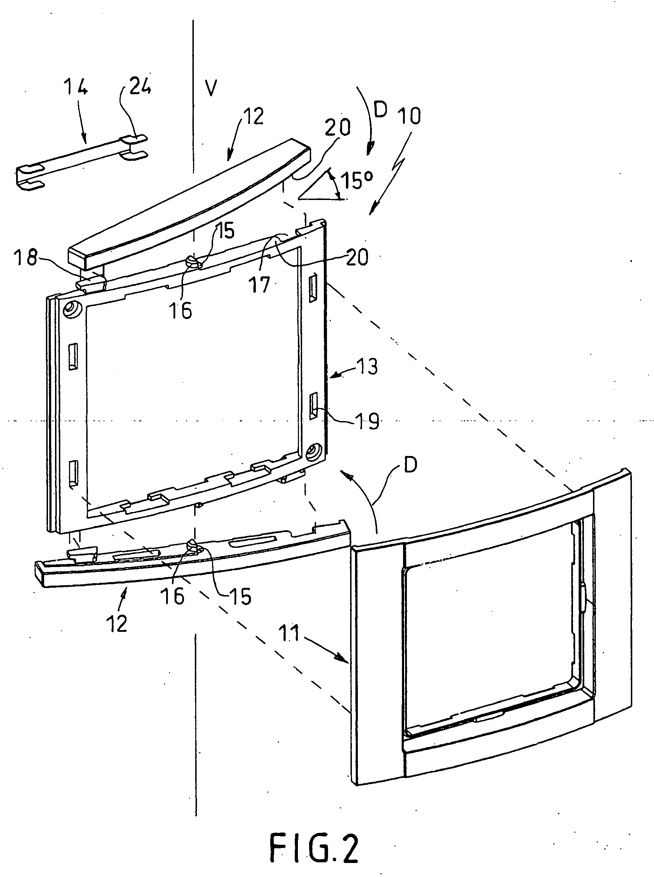

In Fig. 2 wird angedeutet, dass die Verbindung von Abschlussleisten 12 und Unterrahmen13, oder auf nicht dargestellte Weise die von zwei Unterrahmen 13, mittels einer Drehverrastung erfolgt. Dabei werden zunächst Unterrahmen 13 und Abschlussleiste 12 ungefähr um 15° verschwenkt, und so zusammengeführt, dass die der Befestigung dienenden Seitenflächen 20 aufeinanderliegen und die Zentrierzapfen 16 in die korrespondierenden Zentrieröffnungen 15 eintauchen können. Diese bilden eine Schwenkachse, um die herum die Abschlussleisten 12 so weit in Drehrichtung D bewegt werden, bis die Rastmittel 18 in ihre korrespondierenden Rastausnehmungen 17 eintauchen.

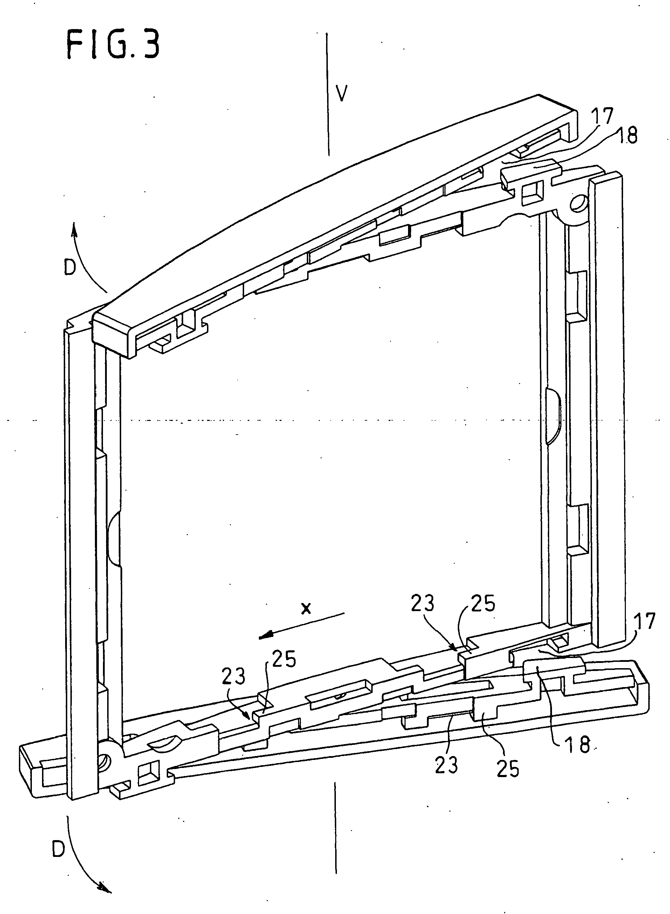

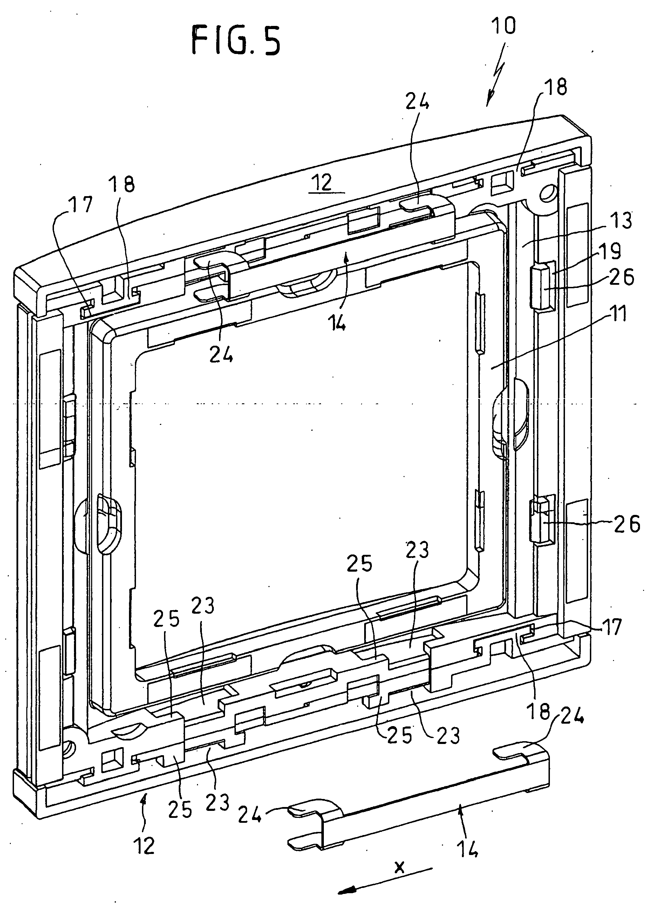

In Fig. 3 ist die mehrteilige Abdeckung 10 noch einmal in rückseitiger Ansicht dargestellt und zeigt, dass die Rastmittel 18 durch eine Drehbewegung um den Zentrierzapfen 16 in die Rastausnehmungen 17 eingreifen können. Das in Fig. 1 und 2 dargestellte Verbindungselement 14 kann zusätzlich in Ausnehmungen 23 eingesetzt und in Richtung x verschoben werden (siehe Fig. 5), so dass die hakenförmigen Endbereiche 24 einen Vorsprung 25 der Ausnehmungen 23 hintergreifen. Das Verbindungselement 14 klemmt somit Abschlussleiste 12 und Unterrahmen 13 zusammen und verstärkt den Zusammenhalt der Teile. Auf dieselbe Weise können selbstverständlich auch mehrere Unterrahmen 13 miteinander verbunden werden.

Fig. 4 zeigt eine Detailansicht von Rastmittel 18 und Rastausnehmung 17. Deutlich sichtbar ist hier insbesondere die Rastschulter 21 der Rastausnehmung 17, welche zur Verrastung von der Rastnase 22 des Rastmittels 18 hintergriffen wird.

Letztlich weist der Unterrahmen 13 noch Rastöffnungen 19 auf, in die Rastmittel verschiedener Funktionselemente eingreifen können. Im vorliegenden Beispiels ist in Fig. 2 dargestellt, wie der Blendrahmen 11 auf diese Weise sicher auf dem Unterrahmen 13 positioniert werden kann. Fig. 5 Zeigt die Verrastung der Rastmittel 26 des Blendrahmens 11 in den Rastöffnungen 19 des Unterrahmens 13.

## Patentansprüche

1. Mehrteilige Abdeckung für Elektroinstallationseinsätze, im Wesentlichen bestehend aus einem den Installationseinsatz wenigstens teilweise umschließenden Rahmen, der wandseitig mit dem Installationseinsatz und raumseitig mit Sicht-, Zier-, Informations- und /oder Bedienelemente verbindbar ist, wobei identische Rahmen aneinander befestigbar sind und ihre gegenüberliegenden Seitenflächen jeweils eine Rastöffnung (17) oder einen Rastvorsprung (18) aufweisen, **dadurch gekennzeichnet, dass** gegenüberliegende, der Befestigung von Nachbarrahmen dienende Seitenflächen der Rahmen jeweils mindestens einen Zentrierzapfen (16) und/oder eine Zentrierbohrung (15) aufweisen, und dass die zugfeste Verbindung der benachbarten Rahmen nach dem Ineinandergreifen von Zentrierzapfen (16) und Zentrierbohrung (15) durch eine Drehverrastung des Rastvorsprunges (18) in der Rastöffnung (17) erfolgt.

2. Abdeckung nach Anspruch 1, **dadurch gekennzeichnet, dass** die Rahmen angrenzend an die der Befestigung dienenden Seitenflächen Befestigungsöffnungen (23) für wenigstens ein klammerartiges Verbindungselement (14) aufweisen, die der zusätzlichen Verbindung benachbarter Rahmen dienen.

3. Abdeckung nach vorhergehenden Ansprüchen, **dadurch gekennzeichnet, dass** nicht der Verbindung benachbarter Rahmen dienende, mindestens einen Zentrierzapfen (16) und/oder eine Zentrierbohrung (15) sowie eine Rastöffnung (17) oder einen Rastvorsprung (18) aufweisende Seitenflächen eines Rahmens mit einer Abschlussleiste (12) versehen sind, die mindestens einen Zentrierzapfen (16) und/oder eine Zentrierbohrung (15) sowie eine Rastöffnung (17) oder einen Rastvorsprung (18) aufweist, und dass die zugfeste Verbindung des Rahmens mit der Abschlußleiste (12) nach dem Ineinandergreifen von Zentrierzapfen (16) und Zentrierbohrung (15) durch eine Drehverrastung des Rastvorsprunges (18) in der Rastöffnung (17) erfolgt.

4. Abdeckung nach vorhergehenden Ansprüchen, **dadurch gekennzeichnet, dass** der Rahmen als Unterrahmen (13) zur Aufnahme großflächiger Sicht-, Zier-, Informations- und /oder Bedienelemente ausgebildet ist.

## Claims

1. Multipart cover for electrical installation inserts, basically consisting of a frame which at least partly encloses the installation insert and may be connected on the wall-side to the installation insert and on the room-side to visual, decorative, information and/or operating elements, it being possible to attach identical frames to one another, the opposite lateral surfaces of which each have a latch opening (17) or a latch projection (18), **characterised in that** opposite lateral surfaces of the frames used for attaching adjacent frames each have at least a centring pin (16) and a centring hole (15), and **in that** the tension resistant connection of the adjacent frames is effected after the centring pin (16) has engaged in the centring hole (15).by rotational locking of the latch projection (18) in the latch opening (17).

2. Cover according to claim 1, **characterised in that** the frames have attachment openings (23) adjoining the lateral surfaces used for the attachment, for at least a clamp-like connecting element (14), which openings (23) are also to join adjacent frames.

3. Cover according to the preceding claims, **characterised in that** lateral surfaces of a frame, which have at least a centring pin (16) and/or a centring hole (15) and a latch opening (17) or a latch projection (18) and are not used for joining adjacent frames, are provided with a cover strip (12) which has at least a centring pin (16) and/or a centring hole (15) and a latch opening (17) or a latch projection (18), and **in that** the tension resistant connection between the frame and the cover strip (12) is made after the centring pin (16) has engaged in the centring hole (15) by rotational locking of the latch projection (18) in the latch opening (17).

4. Cover according to the preceding claims, **characterised in that** the frame is configured as a sub-frame (13) for receiving large-area visual, decorative, information and/or operating elements.

## Revendications

1. Habillage multipièce pour appareillage d'installation électrique à encastrer, essentiellement composé d'un cadre entourant au moins partiellement l'appareillage à encastrer, qui peut être raccordé côté mur audit appareillage et côté pièce à des éléments apparents, de décoration, d'information et/ou de commande, des cadres identiques pouvant être fixés les uns à côté des autres et leurs surfaces latérales opposées présentant chaque fois une ouverture d'arrêt (17) ou une saillie d'arrêt (18), **caractérisé par le fait que** des surfaces latérales opposées du cadre, servant à la fixation de cadres voisins, présentent chaque fois au moins un ergot de centrage (16) et/ou un trou de centrage (15) et que le raccordement résistant à la traction des cadres voisins est réalisé, après emboîtement de l'ergot de centrage (16) et du trou de centrage (15), par un verrouillage tournant de la saillie d'arrêt (18) dans l'ouverture d'arrêt (17).

2. Habillage selon la revendication 1, **caractérisé par le fait que** les cadres présentent, au voisinage des surfaces latérales servant à la fixation, des ouvertures de fixation (23) pour au moins un élément de raccordement (14) de type agrafe qui servent au raccordement supplémentaire de cadres voisins.

3. Habillage selon les revendications précédentes, **caractérisé par le fait que** les surfaces latérales d'un cadre ne servant pas au raccordement de cadres voisins, présentant au moins un ergot de centrage (16) et/ou un trou de centrage (15) ainsi qu'une ouverture d'arrêt (17) ou une saillie d'arrêt (18), sont munies d'une baguette de fermeture (12) qui présente au moins un ergot de centrage (16) et/ou un trou de centrage (15) ainsi qu'une ouverture d'arrêt (17) ou une saillie d'arrêt (18), et que le raccordement résistant à la traction du cadre avec la baguette de fermeture (12) est réalisé, après emboîtement de l'ergot de centrage (16) et du trou de centrage (15), par un verrouillage tournant de la saillie d'arrêt (18) dans l'ouverture d'arrêt (17).

4. Habillage selon les revendications précédentes, **caractérisé par le fait que** le cadre est réalisé sous la forme de cadre de support (13) prévu pour recevoir des éléments apparents, de décoration, d'information et/ou de commande de grande surface.
